# EUROPÄISCHE PATENTSCHRIFT

(11) **EP 1 497 521 B1**
(45) Veröffentlichungstag und Bekanntmachung des Hinweises auf die Patenterteilung: **02.05.2007**
(21) Anmeldenummer: 03744709.1
(22) Anmeldetag: 24.02.2003
(51) Int. Cl.: E05D 5/02, F16B 12/32, E06B 3/96

(54) **BEFESTIGUNGSANORDNUNG VON MÖBELBESCHLÄGEN AN RAHMENPROFILEN VON PLATTEN- ODER TAFELFÖRMIGEN MÖBELTEILEN**
ARRANGEMENT FOR FIXING FURNITURE FITTINGS TO FRAME PROFILES OF PLATE-TYPE OR BOARD-TYPE FURNITURE ELEMENTS
DISPOSITIF DE FIXATION DE FERRURES DE MEUBLES A DES PROFILES CADRE D'ELEMENTS DE MEUBLES EN FORME DE PLAQUES OU DE PANNEAUX

(30) Priorität: 22.03.2002 DE 20204618 U
(43) Veröffentlichungstag der Anmeldung: 19.01.2005
(73) Patentinhaber: MEPLA-WERKE LAUTENSCHLÄGER GmbH & Co. KG, D-64354 Reinheim (DE)
(72) Erfinder: LAUTENSCHLÄGER, Gerhard, Wilhelm, 64395 Brensbach (DE)
(74) Vertreter: Helber, Friedrich
(86) Internationale Anmeldenummer: PCT/EP2003/001835
(87) Internationale Veröffentlichungsnummer: WO 2003/080975

(56) Entgegenhaltungen:
- EP-A- 1 048 816
- DE-B- 1 250 687
- DE-U- 20 107 525
- FR-A- 1 535 094

## Beschreibung

Die Erfindung betrifft eine Befestigungsanordnung mit einem Halteteil und einem Klemmelement für die Befestigung von Möbel-Beschlägen an vorzugsweise stranggepressten und zur Einfassung von platten- oder tafelförmigen Möbelteilen bestimmten Rahmenprofilen, die eine in Profil-Längsrichtung verlaufende, eine Aufnahme und Halterung für den Halteteil des zu befestigenden Beschlages bildende, offen mündende Nut aufweisen, welche im Bereich ihrer Mündung durch zwei zueinander parallele Stege mit einander zugewandten Stirnflächen in ihrer lichten Breite verengt ist, wobei der Halteteil einen auf der freien Oberseite der Stege abstützbaren integralen Flanschabschnitt aufweist, in welchem wenigstens eine Bohrung vorgesehen ist, in welcher der in die Nut eingreifende Schaft des den Halteteil wahlweise auf dem Rahmenprofil festlegenden bzw. zur Demontage oder Längsverschiebung in Nut-Längsrichtung freigebenden Klemmelements drehbar gehaltert ist,

Im Strangpressverfahen aus Metall oder alternativ auch extrudierte Rahmenprofile aus Kunststoff werden in neuerer Zeit im Möbelbau zunehmend zur Einfassung von platten- oder tafelförmigen Möbelteilen, beispielsweise Glas-Türflügeln verwendet, die früher in einen Rahmen aus hölzernen Leisten eingesetzt wurden. Während bei solchen, mit einem hölzernen Rahmen eingefassten Türflügeln oder -klappen die schwenkbare Anlenkung an einem Schrankkorpus mit den bekannten Möbelscharnieren erfolgen konnte, deren Türflügel-Anschlagteil in üblicher Weise als in eine passende Aussparung in der Rückseite des Rahmens einsetzbarer Einstecktopf ausgebildet war, ist die Verwendung von Normalscharnieren bei den erwähnten stranggepressten oder extrudierten Rahmenprofilen nicht möglich, weil der zur Verfügung stehende Raum und die Materialstärke dieser Rahmenprofile die Montage der üblichen Scharniertöpfe nicht erlaubt.

Es sind daher Befestigungsanordnungen für Beschlagteile und zwar auch Scharniere an den hier in Frage stehenden Rahmenprofilen der eingangs erwähnten Art entwickelt worden (DE 201 07 525 U1), bei denen der Türflügel-Anschlagteil eines Scharniers in einer auf der Innenseite des Rahmenprofils vorgesehenen Nut mit verengter Mündung verriegelbar ist, wobei anstelle des üblichen Scharniertopfs ein durch ein Klemmelement in der Nut des Rahmenelements festlegbarer Halteteil verwendet wird

Der Erfindung liegt die Aufgabe zugrunde, diese bekannte Befestigungsanordnung für Beschläge, insbesondere Scharniere an Rahmenelementen bezüglich des Aufbaus zu vereinfachen, wobei die Befestigung des Halteteils am Rahmenelement und die wahlweise Demontage oder Verstellung des Halteteils in Längsrichtung der Nut des Rahmenprofils funktionell verbessert und die Sicherheit gegen versehentliches Lösen und Verstellen erhöht ist.

Ausgehend von einer Befestigungsanordnung der eingangs erwähnten Art wird diese Aufgabe erfindungsgemäß dadurch gelöst, dass der Halteteil im Bereich der vom Schaft des Klemmelements vorgesehenen Bohrung(en) jeweils einen von der Unterseite des Flanschabschnitts vortretenden leistenartigen Ansatz aufweist, an dessen unterem freien Ende ein rechtwinklig vorstehender, unter-halb einer der Stege in den dort verbreiterten Innenraum der Nut einführbarer Verriegelungssteg vorgesehen ist, wobei der zwischen der Unterseite des Flanschabschnitts des Halteteils und der dieser zugewandten Begrenzungsfläche des Verriegelungsstegs gegebene Abstand im Wesentlichen gleich dem Abstand zwischen der oberen und unteren Begrenzungsfläche des zugeordneten, die Nut verengenden Steges ist, dass der in der zugehörigen Bohrung im Flanschabschnitt des Halteteils drehbar gelagerte Schaft des Klemmelements in seinem Durchmesser so bemessen ist, dass der oberhalb des Verriegelungsstegs zwischen der Außenseite des leistenartigen Ansatzes und der freien Außenfläche des Schafts in dem zwischen den Stegen liegenden Abschnitt gemessene Abstand im Wesentlichen gleich dem zwischen den Stirnflächen der die Nut verengenden Stege gemessenen Abstand ist, und dass der Schaft in dem in der bestimmungsgemäßen Befestigungsstellung zwischen den Stirnflächen der Stege liegenden Bereich mit einer Anflächung versehen ist, welche den Schaftdurchmesser im angeflächten Bereich um wenigstens das Maß verringert, um welches der Verriegelungssteg vom leistenartigen Ansatz vorsteht. Durch diese Ausgestaltung wird der Halteteil mittels des integral an seinem Flansch angesetzten leistenförmigen Ansatz mit dem Verriegelungsvorsprung formschlüssig in der Nut festgelegt, wobei das Klemmelement je nach Drehlage das Einführen des leistenförmigen Ansatzes in die Nut ermöglicht und dann durch Drehen den Verriegelungsvorsprung unter einen der einander zugeordneten Stege des Rahmenprofils verschiebt und in dieser Verriegelungsstellung fixiert. Die vom Schaft ausgeübte Verriegelungskraft wirkt also ausschließlich parallel zu dem durch das Rahmenprofil eingefassten platten- oder tafelförmigen Möbelteil, z. B. in horizontaler Richtung parallel zu den Flachseiten einer durch Rahmenprofile der hier in Frage stehenden Art eigefassten Glasscheibe.

Dabei ist vorgesehen, dass das Klemmelement an seinem äußeren Ende mit einem Durchmesser gegenüber dem Durchmesser der Bohrung im Flansch des Halteteils vergrößerten scheibenförmigen Kopfabschnitt vorgesehen ist, welcher sich in der bestimmungsgemäßen Befestigungsstellung des Halteteils auf der Oberseite des Flanschs des Halteteils abstützt.

Der Radius des Kopfabschnitts des Klemmelements ist dann zweckmäßig über einen vorgegebenen Winkelbereich in Umfangsrichtung auf einen zwischen dem Radius des Schafts und dem maximalen Radius des Kopfabschnitts liegendes Maß verringert, wobei im Bereich der den Schaft des jeweiligen Klemmelements aufnehmenden Bohrung(en) von der Oberseite des Flanschabschnitts des Halteteils vortretende Vorsprünge vorgesehen sind, an denen die Übergangsflächen zwischen dem Abschnitt größeren und geringeren Radius des scheibenförmigen Kopfabschnitts bei Drehung des Klemmelements in Anlage bringbar sind. Diese Vorsprünge bilden also in Verbindung mit den erwähnten Übergangsflächen Anschläge, welche den Verdrehungsweg des Klemmelements von der das Einsetzen des Halteteils in die Nut ermöglichende Lage in die bestimmungsgemäße Klemmstellung begrenzen.

In der äußeren Stirnfläche des Klemmelements ist dann zweckmäßig jeweils eine das Ansetzen eines Drehwerkzeugs ermöglichende Ausnehmung, beispielsweise eine Kreuzschlitz-Ausnehmung, vorgesehen, in welche ein Drehwerkzeug, und zwar im erwähnten speziellen Fall ein Kreuzschlitz-Schraubendreher einführbar ist, mit dem das Klemmelement verdrehbar ist.

Alternativ kann es von Vorteil sein, wenn am äußeren freien Ende des Klemmelements anstelle einer Ansetzausnehmung eine integral angebrachte Handhabe - z.B. in Form eines vortretenden Hebelarms, eines mit einer Rändelung versehenen Knaufs etc.- vorgesehen ist. Das Verdrehen des Klemmelements und somit die Verriegelung des Beschlagteils im Rahmenprofil kann dann ohne Werkzeug von Hand erfolgen.

Um zu verhindern, dass das in der zugehörigen Bohrung im Halteteil montierte Klemmelement in der nicht befestigten losen Drehstellung versehentlich aus der Bohrung austritt und dann verloren gehen kann, ist in erfindungsgemäßer Weiterbildung vorgesehen, dass im Bereich des in der bestimmungsgemäßen Befestigungsstellung innerhalb der Nut des Rahmenprofils liegenden Endes des Schafts des Klemmelements ein niedriger, radial von der Umfangsfläche des Schafts vortretender Vorsprung vorgesehen ist, dem eine bogenförmige niedrige Aussparung in der dem Schaft zugewandten Begrenzungswand des leistenförmigen Ansatzes des Halteteils zugeordnet ist. Dabei ist dieser Vorsprung zweckmäßig in dem der Anflächung des Schafts diametral gegenüberliegenden Bereich der Umfangsfläche des Klemmelements vorgesehen, da er dann in der Drehstellung des Klemmelements in der bogenförmigen Aussparung liegt, wenn die Anflächung des Schafts in die das Einführen in die Nut des Rahmenprofils ermöglichende Stellung verdreht ist. Das Klemmelement ist dann also gegen Austritt aus der Bohrung gesichert.

Wenn der auf dem Rahmenprofil zu befestigende Beschlag ein Möbelscharnier ist, ist die Ausgestaltung so getroffen, dass von der dem leistenartigen Ansatz gegenüberliegenden Oberseite des Flanschabschnitts des Halteteils ein Paar von voneinander beabstandeten Wände rechtwinklig vortritt, zwischen denen jeweils das flügelseitige Ende wenigstens eines Gelenkteils des Möbelscharniers auf einem in Bohrungen in den Wänden gehalterten Lagerstift verschwenkbar gelagert ist.

Dabei ist dann eine Ausgestaltung verwirklichbar, bei welcher zwischen den Wänden des Halteteils die türflügelseitigen Enden von zwei, an ihrem anderen Ende jeweils verschwenkbar an einem auf der Tragwand des Korpus eines Möbelstücks befestigbaren Scharnierarm angelenkten Scharnierlenkern oder -armen eines Mehrgelenkscharniers verschwenkbar gelagert sind.

An den vom Flansch vorspringenden Wänden kann in vorteilhafter Weiterbildung der Erfindung jeweils mit Abstand oberhalb des Flanschabschnitts ein vortretender Ansatz vorgesehen sein, der in eine dem Querschnitt des Ansatzes entsprechend geformte Nut oder Vertiefung im Rahmenprofil einführbar ist. In der bestimmungsgemäßen Befestigungsstellung des Halteteils bewirken dann die an den Wänden vorgesehenen vorspringenden Ansätze eine zusätzliche Verriegelung des Halteteils in der Nut des Rahmenprofils.

Die Erfindung ist in der folgenden Beschreibung eines Ausführungsbeispiels in Verbindung mit der Zeichnung näher erläutert, und zwar zeigt:
- Fig. 1: eine Schnittansicht durch eine an einem die Einfassung eines Glastür-Flügels bildenden Rahmenprofil angeschlagenen Viergelenkscharniers, von dessen als langgestreckter Tragarm ausgebildeten Korpus-Anschlagteil nur der türflügelseitige Endbereich dargestellt ist, wobei die Schnittführung rechtwinklig zur Längserstreckung des Rahmenprofils mittig durch eine im Flanschabschnitt des Halteteils vorgesehene, das Klemmelement zur Festlegung des Halteteils am Rahmenprofil aufnehmende Bohrung gelegt ist;
- Fig. 2: eine perspektivische Ansicht eines Abschnitts des zur Einfassung des Glastür-Flügels in Figur 1 verwendeten Rahmenprofils;
- Fig. 3: eine in der Schnittführung der Figur 1 entsprechende Ansicht durch das auf dem Rand des Glastür-Flügels aufgesetzte Rahmenprofil und den zugehörigen Halteteil mit dem eingesetzten Klemmelement in einer noch nicht in die Nut des Rahmenprofils eingesetzten angehobenen Lage des Halteteils;
- Fig. 4: eine Seitenansicht des Halteteils ohne eingesetzte(s) Klemmelement(e);
- Fig. 5: eine Draufsicht auf den Halteteil, gesehen in Richtung des Pfeils 5 in Figur 4;
- Fig. 6: eine Unteransicht des Halteteils;
- Fig. 7: eine Vorderansicht des den Halteteil in der Nut des Rahmenprofils fixierenden Klemmelements;
- Fig. 8: eine Ansicht des Klemmelements, gesehen in Richtung des Pfeils 8 in Figur 7;
- Fig. 9: eine Draufsicht auf das Klemmelement, gesehen in Richtung des Pfeils 9 in Figur 8;
- Fig. 10: eine Unteransicht des Klemmelements, gesehen in Richtung des Pfeils 10 in Figur 8;
- Fig. 11: eine Draufsicht auf den Eckbereich eines vom Rahmenprofil eingefassten Glastür-Flügels, bei welchem die Verbindung von zwei rechtwinklig zusammentreffenden Rahmenprofilen durch einen als Eckverbindung ausgebildeten Beschlag erfolgt; und
- Fig. 12: eine Schnittansicht gesehen in Richtung der Pfeile 12-12 in Fig. 11.

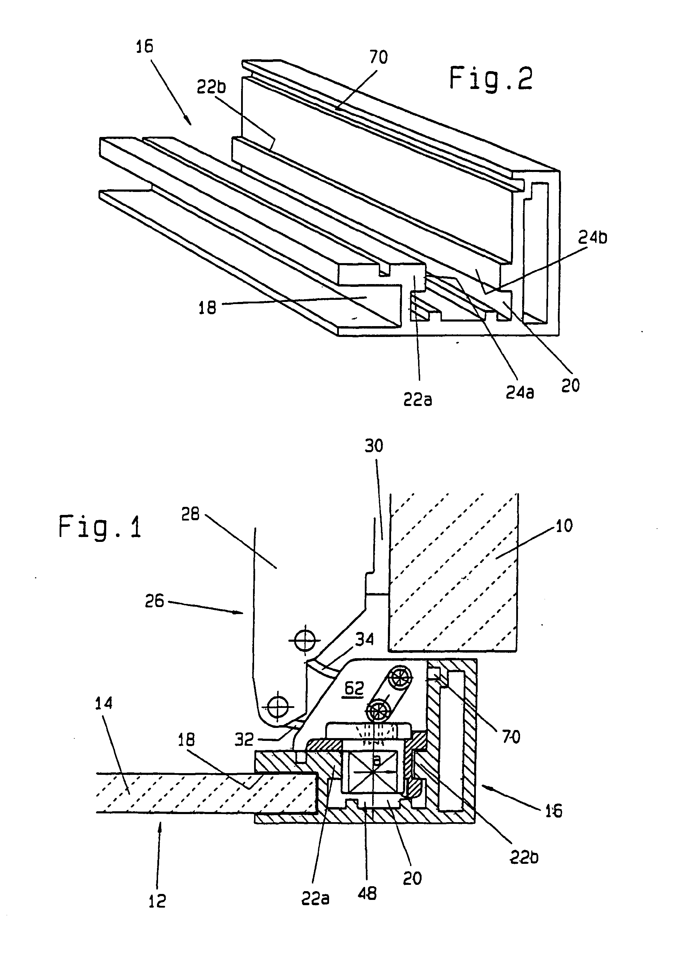

In Figur 1 ist der vordere Endbereich der Seiten- bzw. Korpuswand 10 eines Schrankkorpus gezeigt, dessen offene Vorderseite durch einen Türflügel 12 verschließbar ist, welcher von einer durch einen Rahmen eingefassten Glasscheibe 14 gebildet wird. Der die Glasscheibe 14 einfassende Rahmen wird von im Strangpressverfahren aus Metall, z.B. einer geeigneten Aluminiumlegierung oder von extrudierten Rahmenprofilen 16 aus Kunststoff gebildet.

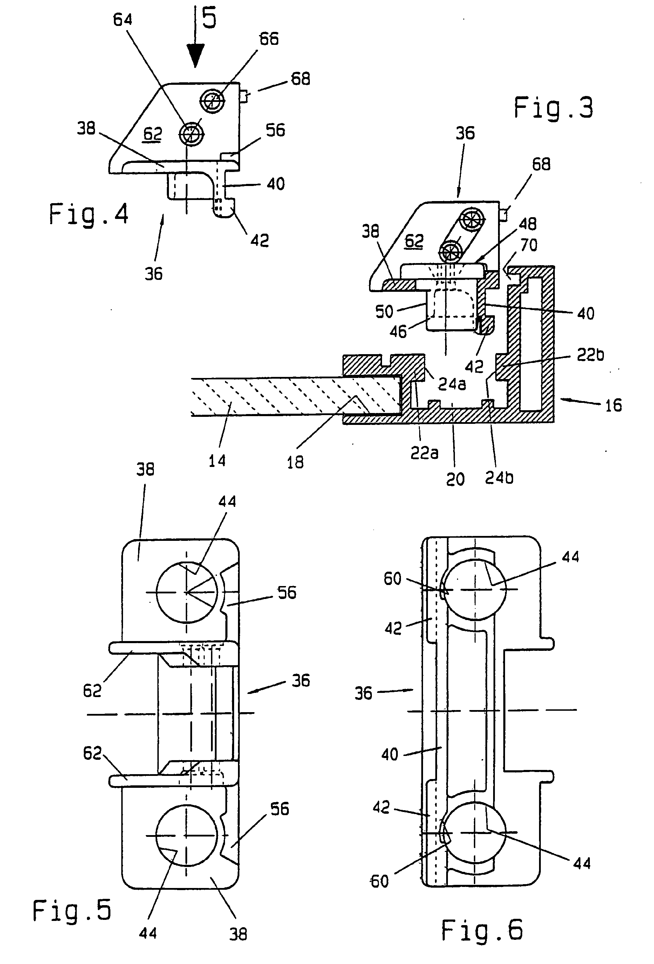

Ein Abschnitt des den Rahmen des Türflügels 12 bildenden Rahmenprofils 16 ist in Figur 2 perspektivisch dargestellt.

Es ist erkennbar, dass dieses Rahmenprofil 16 grundsätzlich den Querschnitt eines Winkelprofils mit zwei rechtwinklig zueinander verlaufenden Winkelarmen aufweist, in dessen in der Darstellung horizontalem Winkelarm eine Aufnahme 18 vorgesehen ist, welche den Randbereich der Glasscheibe 14 des Türflügels 12 aufnimmt.

Anschließend ist in diesem Arm eine offen mündende Nut 20 eingeformt, deren Mündungsbereich durch zwei zueinander parallele Stege 22a, 22b mit einander zugewandten Stirnflächen 24a, 24b in ihrer lichten Breite verengt ist.

Der Steg 22b tritt von der Innenseite des in den Figuren 1 und 2 gezeigten senkrechten Winkelarms des Rahmenprofils 16 vor.

Der Türflügel 12 ist über Scharniere 26 an der Korpuswand 10 angeschlagen, von denen in Figur 1 nur ein als Viergelenkscharnier ausgebildetes Scharnier gezeigt ist. Der Tragwand-Anschlagteil dieses Scharniers ist in üblicher Weise als langgestreckter Tragarm 28 ausgestaltet, der auf einer auf der Innenseite der Korpuswand 10 befestigten Montageplatte 30 verstellbar befestigt ist. Über zwei am vorderen Ende des Tragarms 28 verschwenkbar angelenkte Scharnierlenker 32, 34 ist der Tragarm 28 verschwenkbar mit einem - im Folgenden als Halteteil 36 bezeichneten - Türflügel-Anschlagteil verschwenkbar verbunden, der also praktisch den bei den bekannten Scharnieren vorgesehenen und versenkt in eine Aussparung in der Rückseite eines Türflügels montierbaren Scharniertopf ersetzt.

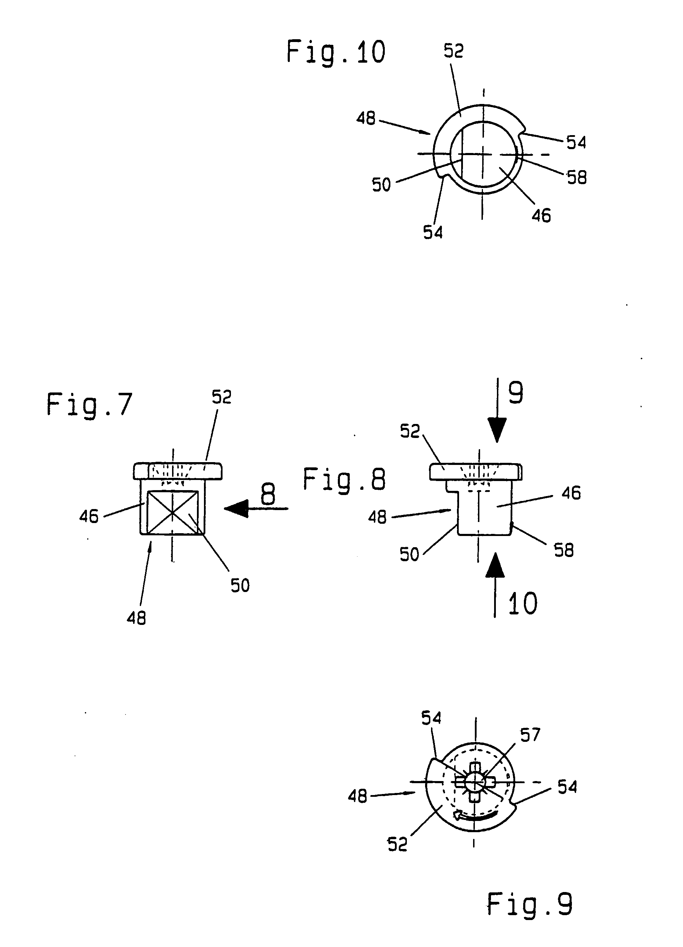

Der in den Figuren 4 bis 6 gesondert dargestellte Halteteil 36 weist einen im Wesentlichen ebenen Flanschabschnitt 38 auf, der im Bereich der Nut 20 auf die Innenseite des Rahmenprofils 16 aufsetzbar ist. Von der Unterseite des Flanschabschnitts 38 tritt jeweils ein leistenartiger Ansatz 40 vor, an dessen unterem freien Ende ein rechtwinklig vorstehender Verriegelungssteg 42 vorgesehen ist. Der Ansatz 40 mit dem Verriegelungssteg 42 ist durch die offene Oberseite der Nut 20 des Rahmenprofils einführbar, wobei dann der Flanschabschnitt 38 auf den in den Zeichnungsfiguren nach oben weisenden Seitenflächen der Stege 22a, 22b aufliegt. In Nutlängsrichtung voneinander beabstandet sind in den äußeren Endbereich des Flanschabschnitts 38 Bohrungen 44 vorgesehen, in welche drehbar der Schaft 46 eines Klemmelements 48 (Figuren 7 bis 10) gelagert ist. Es ist ersichtlich, dass der lichte Abstand zwischen der Unterseite des Flanschabschnitts 38 und der oberen Begrenzungsfläche des Verriegelungsstegs 42 entsprechend der Breite der Stirnfäche 24b des Stegs 22b gewählt ist, so dass also der in die Nut 20 eingesetzte Halteteil nach Auflage des Flanschabschnitts 38 auf der Innenseite des waagerechten Arms des Rahmenprofils 16 derart in Richtung des Pfeils a in Figur 1 nach rechts verschoben werden kann, dass der Steg 22b vom Verriegelungssteg 42 untergriffen wird. Zur Fixierung des Halteteils 36 in dieser Verriegelungsstellung ist das in den Bohrungen 44 verdrehbar gelagerte Klemmelement 48 vorgesehen, dessen Schaft 46 hierfür mit einer Anflächung 50 versehen ist. In Figur 3 ist die Einführ-Drehstellung des Klemmelements veranschaulicht, in welcher die Anflächung 50 in eine zur Stirnfläche 24a des Stegs 22a weisenden Lage steht. Es ist erkennbar, dass die Breite der Nut 22 im verengten Mündungsbereich so auf die über die nach außen weisende Stirnseite des Verriegelungsstegs und den Umfang des Schafts 46 des Klemmelements 48 gemessene Abmessung angepasst ist, dass die von der Unterseite des Flanschabschnitts 38 des Halteteils vortretenden Teile gerade in die Nut einführbar sind. Bei einer anschließenden Verdrehung des Klemmelements 48 ändert sich die Lage der Anflächung 50 entsprechend und die zylindrische äußere Umfangsfläche des Schafts 46 kommt zur Anlage an der Stirnfläche 24a des Stegs 22a. Damit wird der Halteteil 36 insgesamt in die in Figur 1 dargestellte Verriegelungsstellung verschoben und in dieser fixiert. Zum Lösen des Halteteils ist dann ein Zurückdrehen des Klemmelements 48 derart erforderlich, dass die Anflächung 50 am Schaft 46 wieder zur Stirnfäche 24a des Stegs 22a weist.

Das Klemmelement 48 ist an seinem äußeren Ende mit einem im Durchmesser gegenüber dem Durchmesser der Bohrung 44 vergrößerten scheibenförmigen Kopfabschnitt 52 versehen, welcher in der bestimmungsgemäßen Befestigungsstellung des Halteteils 36 auf der Oberseite des Flanschabschnitts 38 aufliegt. Speziell in den Figuren 9 und 10 ist erkennbar, dass der scheibenförmige Kopfabschnitt 52 zwei Bereiche mit unterschiedlichen Radien aufweist, wodurch zwischen diesen beiden Bereichen Übergangsflächen 54 gebildet werden, die im Zusammenwirken mit vom Flanschabschnitt 38 nach oben vortretenden Vorsprüngen 56 Anschläge bilden, welche die mögliche Drehung des Klemmelements auf einen Winkel begrenzen, der gerade hinreicht, um den Schaft 46 aus der zur Stirnfläche 24a ausgerichteten Stellung in eine Stellung zu verdrehen, in welcher die an die Anflächung 50 anschließende Umfangswandung des Schafts 46 an der Stirnfläche 24a anliegt. Für die Drehbetätigung des Klemmelements 48 ist in der nach oben weisenden freien Stirnfläche des scheibenförmigen Kopfabschnitts 52 des Klemmelements 48 ein Kreuzschlitz 57 vorgesehen, in welchen das Betätigungsende des Schafts eines Kreuzschlitz-Schraubendrehers einführbar ist.

In den Figuren 8 und 10 ist noch erkennbar, dass im freien inneren Endbereich des Schafts 46 des Klemmelements 48 in dem der Anflächung 50 gegenüberliegenden Bereich der Umfangsfläche des Schafts 46 ein niedriger radialer Vorsprung 58 vorgesehen ist, dem bogenförmige niedrige Aussparungen 60 in der dem Schaft 46 zugewandten Begrenzungswand des leistenförmigen Ansatzes 40 zugeordnet sind. In der Einführstellung des Klemmelements 48 in den Bohrungen 44 greift der Vorsprung 58 in die Aussparung 60 ein und sichert das Klemmelement dadurch gegen Herausziehen aus der Bohrung 44.

Vom Flanschabschnitt 38 treten rechtwinklig zur Nut-Längsrichtung zwei voneinander beabstandete Wände 62 vor, zwischen die jeweils die türflügelseitigen Enden der Scharnierlenker 32, 34 geführt und dort auf Lagerstiften verschwenkbar gelagert sind, deren Enden in Bohrungen 64, 66 in den Wänden 62 gehalten sind.

In den Figuren 3 und 4 sind an den jeweils rechts liegenden senkrechten Begrenzungsflächen der Wände 62 sind strichpunktiert noch zusätzlich vorsehbare kurze Ansätze 68 angedeutet, welche in der bestimmungsgemäßen Verriegelungsstellung des Halteteils 36 in der Nut 20 in eine Nut 70 in der zugewandten Innenseite des Rahmenteils eingreifen und so eine zusätzliche Verriegelung des Halteteils in Demontagerichtung bewirken.

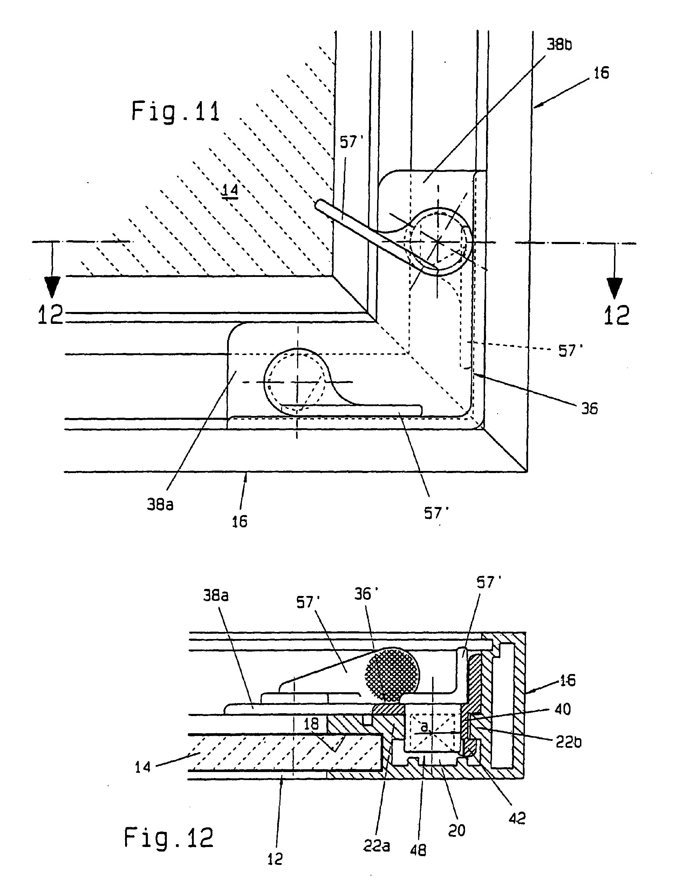

In den Figuren 11 und 12 ist ein Ausführungsbeispiel der erfindungsgemäßen Befestigungsanordnung gezeigt, bei welchem der zu befestigende Beschlag kein das Verschwenken eines Türflügels 12 ermöglichenden Gelenkscharnier der vorstehend beschriebenen Art sondern ein Eckverbinder 36' ist, mit dem zwei miteinander rechtwinklig zusammentreffende Rahmenprofile 16 in einem Gehrungsstoß lösbar miteinander verbindbar sind.

Der Flanschabschnitt 38 des zuvor beschriebenen Ausführungsbeispiels ist hier aus zwei integral miteinander verbundenen, rechtwinklig zueinander verlaufenden Flansch-Teilabschnitten 38a, 38b zusammengesetzt, die jeweils mit einem von deren Unterseite vortretenden leistenartigen Ansatz 40 und einem Verriegelungssteg 42 versehen sind, welche - entsprechend den Flansch-Teilabschnitten 38a, 38b rechtwinklig zueinander verlaufen. In jedem der Flansch-Teilabschnitte ist jeweils der Schaft wenigstens eines Klemmelements 48 der bereits beschriebenen Art drehbar gelagert, wobei jedoch anstelle der Werkzeug-Ansetzausnehmung 57 ein von der Stirnseite des Klemmelements radial vortretender Hebelarm 57' vorgesehen ist, welcher das Drehen der Klemmelemente 48 ohne Werkzeug von Hand ermöglicht.

Es ist ersichtlich, dass im Rahmen des Erfindungsgedankens Abwandlungen und Weiterbildungen der beschriebenen Ausführungsbeispiele der erfindungsgemäßen Befestigungsanordnung verwirklichbar sind. Anstelle von als Gelenkscharnier oder als Eckverbinder für zwei rechtwinklig zu verbindende Rahmenprofile kann der Beschlag auch als Verbindungsbeschlag von rechtwinklig zusammentreffenden Möbelteilen, von denen einer mit einem Rahmenprofil der hier in Frage stehenden Art versehen ist, ausgebildet sein. Auch eine Anwendung als stufenlos in Nutlängsrichtung verstellbarer Fachbodenträger ist ohne Weiteres denkbar. Erfindungswesentlich ist lediglich, dass ein in die im Mündungsbereich verengte Nut 20 lose einsetzbarer Halteteil durch ein verdrehbar in ihm gelagertes Klemmelement in einer Verriegelungslage verschiebbar ist, in welcher der Halteteil spielfrei und formschlüssig in der Nut verriegelt ist.

## Patentansprüche

1. Befestigungsanordnung mit einem Halteteil (36) und einem Klemmelement (48) für die Befestigung von Möbel-Beschlägen an vorzugsweise stranggepressten und zur Einfassung von platten- oder tafelförmigen Möbelteilen bestimmten Rahmenprofilen (16), die eine in Profil-Längsrichtung verlaufende, eine Aufnahme und Halterung für den Halteteil (36) des zu befestigenden Beschlages (26) bildende, offen mündende Nut (20) aufweisen, welche im Bereich ihrer Mündung durch zwei zueinander parallele Stege (22a; 22b) mit einander zugewandten Stirnflächen (24a; 24b) in ihrer lichten Breite verengt ist, wobei der Halteteil (36) einen auf der freien Oberseite der Stege abstützbaren integralen Flanschabschnitt (38) aufweist, in welchem wenigstens eine Bohrung (44) vorgesehen ist, in welcher der in die Nut (20) eingreifende Schaft (46) des den Halteteil (36) wahlweise auf dem Rahmenprofil (16) festlegenden bzw. zur Demontage oder Längsverschiebung in Nut-Längsrichtung freigebenden Klemmelements (48) drehbar gehaltert ist,
**dadurch gekennzeichnet,**
**dass** der Halteteil (36) im Bereich der vom Schaft (46) des Klemmelements (48) vorgesehenen Bohrung(en) (44) jeweils einen von der Unterseite des Flanschabschnitts (38) vortretenden leistenartigen Ansatz (40) aufweist, an dessen unterem freien Ende ein rechtwinklig vorstehender, unterhalb einer der Stege (22a; 22b) in den dort verbreiterten Innenraum der Nut (20) einführbarer Verriegelungssteg (42) vorgesehen ist, wobei der zwischen der Unterseite des Flanschabschnitts (38) des Halteteils (36) und der dieser zugewandten Begrenzungsfläche des Verriegelungsstegs (42) gegebene Abstand im Wesentlichen gleich dem Abstand zwischen der oberen und unteren Begrenzungsfläche des zugeordneten, die Nut (20) verengenden Steges (22b) ist,
**dass** der in der zugehörigen Bohrung (44) im Flanschabschnitt (38) des Halteteils (36) drehbar gehalterte Schaft (46) des Klemmelements (48) in seinem Durchmesser so bemessen ist, dass der oberhalb des Verriegelungsstegs (42) zwischen der Außenseite des leistenartigen Ansatzes (40) und der freien Außenfläche des Schafts (46) in dem zwischen den Stegen (22a; 22b) liegenden Abschnitt gemessene Abstand im Wesentlichen gleich dem zwischen den Stirnflächen (24a; 24b) der die Nut (20) verengenden Stege (22a; 22b) gemessenen Abstand ist, und
**dass** der Schaft (46) in dem in der bestimmungsgemäßen Befestigungsstellung zwischen den Stirnflächen (24a; 24b) der Stege (22a; 22b) liegenden Bereich mit einer Anflächung (50) versehen ist, welche den Schaftdurchmesser im angeflächten Bereich um wenigstens das Maß verringert, um welches der Verriegelungssteg (42) vom leistenartigen Ansatz (40) vorsteht.

2. Befestigunganordnung nach Anspruch 1, **dadurch gekennzeichnet, dass** das Klemmelement (48) an seinem äußeren Ende mit einem im Durchmesser gegenüber dem Durchmesser der Bohrung (44) im Flanschabschnitt (38) des Halteteils (36) vergrößerten scheibenförmigen Kopfabschnitt (52) versehen ist.

3. Befestigungsanordnung nach Anspruch 2, **dadurch gekennzeichnet, dass** der Radius des Kopfabschnitts (52) des Klemmelements (48) über einen vorgegebenen Winkelbereich in Umfangsrichtung auf einen zwischen dem Radius des Schafts (46) und dem maximalen Radius des Kopfabschnitts (52) liegendes Maß verringert ist, und dass im Bereich der den Schaft (46) des jeweiligen Klemmelements (48) aufnehmenden Bohrung(en) (44) von der Oberseite des Flanschabschnitts (38) des Halteteils (36) vortretende Vorsprünge (56) vorgesehen sind, an denen die Übergangsflächen (54) zwischen dem Abschnitt größeren und geringeren Radius des scheibenförmigen Kopfabschnitts (52) bei Drehung des Klemmelements (48) in Anlage bringbar sind.

4. Befestigungsanordnung nach einem der Ansprüche 1 bis 3, **dadurch gekennzeichnet, dass** in der äußeren Stirnfläche des Klemmelements (48) eine das Ansetzen eines Drehwerkzeugs ermöglichende Ausnehmung (Kreuzschlitz 57) vorgesehen ist.

5. Befestigungsanordnung nach einem der Ansprüche 1 bis 3, **dadurch gekennzeichnet, dass** am äußeren freien Ende des Klemmelements (48) eine das Drehen des Klemmelements von Hand zulassende Handhabe (Hebelarm 57') vorgesehen ist.

6. Befestigungsanordnung nach einem der Ansprüche 1 bis 5, **dadurch gekennzeichnet, dass** im Bereich des in der bestimmungsgemäßen Befestigungsstellung innerhalb der Nut (20) des Rahmenprofils (16) liegenden Endes des Schafts (46) des Klemmelements (48) ein niedriger, radial von der Umfangsfläche des Schafts (46) vortretender Vorsprung (58) vorgesehen ist, dem eine bogenförmige niedrige Aussparung (60) in der dem Schaft (46) zugewandten Begrenzungswand des leistenförmigen Ansatzes (40) des Halteteils (36) zugeordnet ist.

7. Befestigungsanordnung nach Anspruch 6, **dadurch gekennzeichnet, dass** der Vorsprung (58) in dem der Anflächung (50) des Schafts (46) diametral gegenüberliegenden Bereich der Umfangsfläche des Schafts (46) des Klemmelements (48) vorgesehen ist.

8. Befestigungsanordnung nach einem der Ansprüche 1 bis 7, **dadurch gekennzeichnet, dass** von der dem leistenartigen Ansatz (40) gegenüberliegenden Oberseite des Flanschabschnitts (38) des Halteteils (36) ein Paar von voneinander beabstandeten Wänden (62) rechtwinklig vortritt, zwischen denen jeweils das flügelseitige Ende wenigstens eines Gelenkteils eines Möbelscharniers (26) auf einem in Bohrungen (64; 66) in den Wänden (62) gehalterten Lagerstift verschwenkbar gelagert ist.

9. Befestigungsanordnung nach Anspruch 8, **dadurch gekennzeichnet, dass** zwischen den Wänden (62) des Halteteils (36) die türflügelseitigen Enden von zwei, am jeweils anderen Ende verschwenkbar an einem auf der Tragwand des Korpus eines Möbelstücks befestigbaren Scharnierarm (28) angelenkten Scharnierlenkern (32; 34) oder -armen eines Mehrgelenkscharniers (26) verschwenkbar gelagert sind.

10. Befestigungsanordnung nach Anspruch 8 oder 9, **dadurch gekennzeichnet, dass** an den vom Flanschabschnitt (38) vorspringenden Wänden (62) jeweils mit Abstand oberhalb des Flanschabschnitts (38) ein Ansatz (68) vorsteht, der in eine dem Querschnitt des Ansatzes (68) entsprechend geformte Nut oder Vertiefung (70) im Rahmenprofil (16) einführbar ist.

11. Befestigungsanordnung nach einem der Ansprüche 1 bis 7, **dadurch gekennzeichnet, dass** der Flanschabschnitt von zwei rechtwinklig zueinander verlaufenden integralen Flansch-Teilabschnitten (38a; 38b) mit jeweils einem von deren Unterseite vortretenden leistenartigen Ansatz (40) und Verriegelungssteg (42) gebildet wird, und dass in jedem Flansch-Teilabschnitt jeweils der Schaft wenigstens eines Klemmelements (48) drehbar gelagert ist.

## Claims

1. An attachment arrangement with a holding part (36) and a clamping element (48) for attaching furniture fittings onto preferably extruded frame profiles (16) which are designated for the framing of plate or board shaped furniture parts and which have an open ending groove (20) that runs in the longitudinal direction of the profile and forms a receptacle and a mount for the holding part (36) of the fitting (26) to be attached, which groove is narrowed in its clearance in the area of its opening by two parallel webs (22a; 22b) with end faces (24a; 24b) facing each other, whereby the holding part (36) has an integral flange section (38) that can be supported on the free upper side of the webs, and in which a least one hole (44) is provided, in which the shaft (46), meshing in the groove (20) of the clamping element (48), which alternatively attaches the holding part (36) to the frame profile (16) or releases it for disassembly or longitudinal displacement along the direction of the groove, is mounted so as to pivot,
**characterised in that**
the holding part (36) has, in the area of the hole(s) (44) provided on the shaft (46) of the clamping element (48), in each case, a bar-like appendage (40) protruding from the under side of the flange section (38), at whose lower free end a locking web (42) is provided that protrudes at a right angle and that can be inserted below one of the webs (22a; 22b) into the interior space of the groove (20) that is widened there, where the distance given between the under side of the flange section (38) of the holding part (36) and the bounding surface of the locking web (42) facing it is essentially equal to the distance between the upper and the lower bounding surfaces of the associated web (22b) which narrows the groove (20),
that the shaft (46) of the clamping element (48), mounted so as to pivot in the associated hole (44) in the flange section (38) of the holding part (36), has in its diameter dimensions such that the distance between the outside of the bar-like appendage (40) and the free outside surface of the shaft (46) measured above the locking web (42) in the section lying between the webs (22a; 22b), is essentially equal to the distance measured between the end faces (24a; 24b) of the webs (22a; 22b) that narrow the groove (20), and
that the shaft (46) has, in the area between the end faces (24a; 24b) and the webs (22a; 22b) in the specified attachment position, a flattening (50) that reduces the shaft diameter in the flattened area by at least the amount by which the locking web (42) protrudes from the bar-like appendage (40).

2. An attachment arrangement according to claim 1, **characterised in that** the clamping element (48) is provided on its outer end with a disk-shaped head section (52) that is enlarged in its diameter with respect to the diameter of the hole (44) in the flange section (38) of the holding part (36).

3. An attachment arrangement according to claim 2, **characterised in that** the radius of the head section (52) of the clamping element (48) is reduced over a specified angle range in the circumferential direction by an amount between the radius of the shaft (46) and maximum radius of the head section (52) and that in the area of the hole(s) (44) that accept the shaft (46) of the corresponding clamping element (48), protrusions (56) are provided extending from the upper side of the flange section (38) of the holding part (36), where the transition surfaces (54) between the section of greater and smaller radius of the plate-like head section (52) can be brought into contact by turning the clamping element (48).

4. An attachment arrangement according to one of claims 1 through 3, **characterised in that**, that on the outer end face of the clamping element (48), a recess (cross-slot 57) is provided that makes application of a turning tool possible.

5. An attachment arrangement according to one of claims 1 through 3, **characterised in that** at the outer free end of the clamping element (48), a handle (lever arm 57') is provided that makes turning of the clamping element by hand possible.

6. An attachment arrangement according to one of claims 1 through 5, **characterised in that** in the area of the end of the shaft (46) of the clamping element (48) lying in the groove (20) of the frame profile (16) in the specified attachment position, a low protrusion (58) extending radially from the circumferential surface of the shaft (46) is provided, associated with which is an arch-shaped, low recess (60) in the bounding wall facing the shaft (46) of the bar-like appendage (40) of the holding part (36).

7. An attachment arrangement according to claim 6, **characterised in that** the protrusion (58) is provided in the circumferential area of the shaft (46) of the clamping element (48) that is lying diametrically opposite the flattening (50) of the shaft (46).

8. An attachment arrangement according to one of the claims 1 through 7, **characterised in that** from the upper side of the flange section (38) of the holding part (36) lying opposite the bar-like appendage (40), a pair of walls (62), offset from each other, extends at a right angle, between which, in each case, the wing-side end of at least one joint part of a furniture hinge (26) is mounted so as to pivot on a mounting pin held in holes (64; 66) in the walls (62).

9. An attachment arrangement according to claim 8, **characterised in that** between the walls (62) of the holding part (36), the ends of two hinge guides (32; 34) or arms of a multi-joint hinge (26) are mounted so as to pivot, joined in each case to the other end to a hinge arm (28) that can be attached to the bearing wall of the body of a piece of furniture on the side of the door wings.

10. An attachment arrangement according to claim 8 or 9, **characterised in that** at the walls (62) extending from the flange section (38), offset in each case above the flange section (38), an appendage (68) extends that can be guided into a groove or recess(70) shaped according to the cross-section of the appendage (68) of the frame profile (16).

11. An attachment arrangement according to one of claims 1 through 7, **characterised in that** the flange section is formed by two integral partial flange sections (38a; 38b) running at a right angle to each other with, in each case, a bar-like appendage (40) and a locking web (42) protruding from their under side, and that in each case the shaft of at least one clamping element (48) is mounted so as to pivot in each partial flange section.

## Revendications

1. Dispositif de fixation comprenant une partie de fixation (36) et un élément de serrage (48), pour la fixation de ferrures de meubles sur des profilés de cadre (16) de préférence filés et prévus pour encadrer des parties de meuble en forme de plaques ou de panneaux, les profilés de cadre présentant une rainure (20) avec une embouchure ouverte, s'étendant dans la direction longitudinale des profilés, formant un logement et une fixation pour la partie de fixation (36) de la ferrure (26) à fixer, laquelle rainure a une largeur intérieure réduite, dans la région de son embouchure, par deux nervures parallèles l'une à l'autre (22a ; 22b) avec des faces frontales tournées l'une vers l'autre (24a ; 24b), la partie de fixation (36) présentant une portion de bride (38) intégrale, pouvant s'appuyer sur le côté supérieur libre des nervures, dans laquelle est prévu au moins un alésage (44) dans lequel est maintenue en rotation la tige (46), s'engageant dans la rainure (20), de l'élément de serrage (48) fixant la partie de fixation (36) de manière sélective sur le profilé de cadre (16) ou la libérant en vue du démontage ou du coulissement longitudinal dans la direction longitudinale de la rainure,
**caractérisé en ce que**
la partie de fixation (36) présente, dans la région de l'alésage ou des alésages (44) prévus pour la tige (46) de l'élément de serrage (48), à chaque fois une pièce ajoutée (40) en forme de réglette, saillant depuis le côté inférieur de la portion de bride (38), à l'extrémité libre inférieure de laquelle est prévue une nervure de verrouillage (42) saillant à angle droit, pouvant être introduite en dessous de l'une des nervures (22a ; 22b) dans l'espace intérieur de la rainure (20), élargi à cet endroit, la distance entre le côté inférieur de la portion de bride (38) de la partie de fixation (36) et la surface de limitation, tournée vers celle-ci, de la nervure de verrouillage (42), étant substantiellement égale à la distance entre la surface supérieure de limitation et la surface inférieure de limitation de la nervure associée (22b) réduisant la rainure (20),
**en ce que** la tige (46) de l'élément de serrage (48), maintenue de manière à pouvoir tourner dans l'alésage associé (44) dans la portion de bride (38) de la partie de fixation (36), a un diamètre dimensionné de telle sorte que la distance mesurée au-dessus de la nervure de verrouillage (42) entre le côté extérieur de la pièce ajoutée (40) en forme de réglette et la surface extérieure libre de la tige (46) dans la portion située entre les nervures (22a ; 22b), soit substantiellement égale à la distance mesurée entre les faces frontales (24a ; 24b) des nervures (22a ; 22b) réduisant la rainure (20), et
**en ce que** la tige (46) dans la région située dans la position de fixation conforme, entre les faces frontales (24a ; 24b) des nervures (22a ; 22b), est pourvue d'un méplat (50) qui réduit le diamètre de la tige dans la région aplatie, d'au moins la mesure suivant laquelle la nervure de verrouillage (42) dépasse de la pièce ajoutée (40) en forme de réglette.

2. Dispositif de fixation selon la revendication 1, **caractérisé en ce que** l'élément de serrage (48) est pourvu à son extrémité extérieure d'une portion de tête (52) en forme de disque, dont le diamètre est agrandi par rapport au diamètre de l'alésage (44) dans la portion de bride (38) de la partie de fixation (36).

3. Dispositif de fixation selon la revendication 2, **caractérisé en ce que** le rayon de la portion de tête (52) de l'élément de serrage (48) est réduit sur une région angulaire prédéfinie dans le sens périphérique à une dimension comprise entre le rayon de la tige (46) et le rayon maximal de la portion de tête (52), et **en ce que** dans la région de l'alésage ou des alésages (44) recevant la tige (46) de l'élément de serrage respectif (48), sont prévues des saillies (56) saillant depuis le côté supérieur de la portion de bride (38) de la partie de fixation (36), sur lesquelles les faces de transition (54) entre la portion de plus grand rayon et la portion de plus petit rayon de la portion de tête (52) en forme de disque peuvent être amenées en appui lors de la rotation de l'élément de serrage (48).

4. Dispositif de fixation selon l'une quelconque des revendications 1 à 3, **caractérisé en ce que** dans la face frontale extérieure de l'élément de serrage (48) est prévu un évidement (fente cruciforme 57) permettant de placer un outil rotatif.

5. Dispositif de fixation selon l'une quelconque des revendications 1 à 3, **caractérisé en ce qu'**à l'extrémité libre extérieure de l'élément de serrage (48) est prévue une manette (bras de levier 57') permettant de faire tourner l'élément de serrage à la main.

6. Dispositif de fixation selon l'une quelconque des revendications 1 à 5, **caractérisé en ce que** dans la région de l'extrémité de la tige (46) de l'élément de serrage (48), située dans la position de fixation conforme à l'intérieur de la rainure (20) du profilé de cadre (16), est prévue une saillie plus basse (58), saillant radialement depuis la surface périphérique de la tige (46), à laquelle est associé un évidement bas (60) de forme courbe dans la paroi de limitation, tournée vers la tige (46), de la pièce ajoutée (40) en forme de réglette de la partie de fixation (36).

7. Dispositif de fixation selon la revendication 6, **caractérisé en ce que** la saillie (58) est prévue dans la région, diamétralement opposée au méplat (50) de la tige (46), de la surface périphérique de la tige (46) de l'élément de serrage (48).

8. Dispositif de fixation selon l'une quelconque des revendications 1 à 7, **caractérisé en ce qu'**une paire de parois (62) espacées l'une de l'autre dépasse en angle droit du côté supérieur, opposé à la pièce ajoutée (40) en forme de réglette, de la portion de bride (38) de la partie de fixation (36), l'extrémité, du côté du battant, d'au moins une partie d'articulation d'une charnière de meuble (26) étant montée à chaque fois entre cette paire de parois de manière à pouvoir pivoter sur un pivot.maintenu dans des alésages (64 ; 66) dans les parois (62).

9. Dispositif de fixation selon la revendication 8, **caractérisé en ce que** les extrémités, du côté du battant de porte, de deux bras oscillants ou bras de charnière (32 ; 34) d'une charnière à articulation multiple (26), articulés à chaque autre extrémité de manière à pouvoir pivoter sur un bras de charnière (28) pouvant être fixé sur la paroi de support du corps d'un meuble, sont montées de manière à pouvoir pivoter entre les parois (62) de la partie de fixation (36).

10. Dispositif de fixation selon la revendication 8 ou 9, **caractérisé en ce qu'**une pièce ajoutée (68) dépasse à chaque fois à distance au-dessus de la portion de bride (38) sur les parois (62) saillant de la portion de bride (38), et peut être insérée dans le profilé de cadre (16) dans une rainure ou un renfoncement (70) de forme correspondant à la section transversale de la pièce ajoutée (68).

11. Dispositif de fixation selon l'une quelconque des revendications 1 à 7, **caractérisé en ce que** la portion de bride est formée par deux portions partielles de bride (38a ; 38b), intégrales, s'étendant à angle droit l'une par rapport à l'autre, avec à chaque fois une pièce ajoutée (40) en forme de réglette saillant depuis leur côté inférieur et avec une nervure de verrouillage (42), et **en ce qu'**à chaque fois la tige d'au moins un élément de serrage (48) est montée de manière rotative dans chaque portion partielle de bride.
